# FASCICULE DE BREVET EUROPEEN

(11) **EP 2 540 136 B1**
(45) Date de publication et mention de la délivrance du brevet: **07.11.2018**
(21) Numéro de dépôt: 11712630.0
(22) Date de dépôt: 24.02.2011
(51) Int. Cl.: H04L 5/00, H04B 1/40, H04W 72/04

(54) **PROCÉDÉ ET DISPOSITIF D' ÉMISSION/RÉCEPTION DE SIGNAUX ÉLECTROMAGNÉTIQUES REÇUS/ÉMIS SUR UNE OU PLUSIEURS PREMIÈRES BANDES DE FRÉQUENCES**
VERFAHREN UND VORRICHTUNG ZUM SENDEN/EMPFANGEN VON ÜBER EIN ODER MEHRERE PRIMÄRFREQUENZBÄNDER EMPFANGENEN/GESENDETEN ELEKTROMAGNETISCHEN SIGNALEN
METHOD AND DEVICE FOR SENDING/RECEIVING ELECTROMAGNETIC SIGNALS RECEIVED/SENT ON ONE OR MORE FIRST FREQUENCY BANDS

(30) Priorité: 26.02.2010 FR 1051418
(43) Date de publication de la demande: 02.01.2013
(73) Titulaire: EBlink, 2018 Anvers (BE)
(72) Inventeur: BELLOT, Laurent, F-78000 Versailles (FR); BLANC, Stéphane, F-91650 Breuillet (FR); BOUKOUR, Tariq, F-59310 Beuvry La Foret (FR); PLUMECOQ, Jean-Christophe, F-91120 Palaiseau (FR); EL SAYED, Jawad, F-92400 Courbevoie (FR)
(74) Mandataire: Lefevre-Groboillot, David André
(86) Numéro de dépôt international: PCT/FR2011/050380
(87) Numéro de publication internationale: WO 2011/104481

(56) Documents cités:
- WO-A1-97/29608
- WO-A1-99/48309
- US-A1- 2003 016 701
- US-B1- 6 223 021

## Description

Le domaine de l'invention est celui des transmissions de signaux électromagnétiques.

L'invention concerne plus particulièrement un procédé et un dispositif d'émission/réception de signaux électromagnétiques reçus/émis sur une ou plusieurs premières bandes de fréquences.

Les signaux électromagnétiques sont utilisés dans de nombreux domaines pour communiquer de nombreuses formes d'information. Dans le spectre de la lumière, les signaux électromagnétiques sont généralement véhiculés dans des fibres optiques. Dans le spectre des ondes radio, les signaux électromagnétiques sont véhiculés dans des câbles coaxiaux ou rayonnés et captés par des antennes. Lorsque les signaux sont transmis sur un médium matériel tel qu'un câble ou une fibre optique, il est possible de multiplier les média pour augmenter la quantité de signaux transmissibles. Dans un médium unique, l'espace ou une même fibre optique, de nombreux problèmes se posent, problèmes d'interférences, de bandes de fréquences disponibles ou d'exploitation du spectre.

Lorsqu'on dispose d'une bande de fréquence, il convient de ne pas la gaspiller. Une fragmentation des sous-bandes de fréquences à l'intérieur d'une bande de fréquence disponible demande une plus grande largeur de bande pour transmettre une même quantité de signaux.

La recherche d'une exploitation optimale d'une bande de fréquences en évitant les fragmentations est un souci constant.

La demande internationale de brevet WO2008/067584 divulgue un procédé dans lequel des signaux numériques en bande de base sont modulés dans des sous-bandes de fréquences contiguës. Cependant ce document se limite à l'enseignement d'une production de bande de fréquences non fragmentée lorsqu'on contrôle le procédé de modulation des signaux d'origine, par exemple en bande de base.

Un problème se pose lorsque les signaux à émettre ne sont pas reçus en bande de base mais déjà modulés dans des sous-bandes de fréquences en utilisant des codages et des protocoles complexes.

Un problème récurent se pose alors que les sous bandes de fréquences dans lesquelles les signaux se situent, sont réparties de manière fragmentée dans une, voire dans plusieurs bandes de fréquence. C'est notamment le cas dans les télécommunications mobiles ou cellulaires pour lesquels des bandes de fréquences différentes, souvent disjointes, sont attribuées à chaque standard, 2G, 3G, 4G en constante évolution.

Une même bande de fréquence peut à son tour être morcelée entre plusieurs opérateurs. Pour un même opérateur, les sous bandes de fréquences peuvent être différemment réparties avec des vides volontaires ou non entre les liens montants et les liens descendants ou d'une cellule à l'autre.

WO9729608 divulgue un procédé pour intégration d'un système de communication sans fil dans une installation de télévision par câble.

US6223021 divulgue un procédé de filtration du signal.

Pour remédier aux problèmes de l'état antérieur de la technique, l'invention a pour objet un procédé d'émission/réception de signaux électromagnétiques reçus/émis sur une ou plusieurs premières bandes de fréquences. De façon remarquable, le procédé comprend des étapes de :
- sélection de premières sous-bandes de fréquences formant un premier ensemble de sous-bandes de fréquences de la ou les dites premières bandes de fréquences ;
- association pilotée par des règles d'organisation, à chaque première sous-bande de fréquences formant ledit premier ensemble, d'un ou plusieurs deuxièmes ensembles de sous-bandes de fréquences formant une ou plusieurs bandes de fréquences ;
- détermination pilotée par des règles d'optimisation, de translations de fréquence pour transposer les signaux reçus dans les premières sous-bandes de fréquences en signaux émis dans la ou les deuxièmes bandes de fréquences.

Particulièrement, la sélection est appliquée uniquement aux sous-bandes de fréquences dans lesquelles des signaux électromagnétiques utiles sont reçus.

Particulièrement aussi, les règles d'organisation comprennent des règles consistant à associer une deuxième sous-bande de fréquences à un segment couvrant tout ou partie d'une première sous-bande de fréquences.

Avantageusement, les règles d'optimisation comprennent des règles de construction d'un deuxième ensemble de sous-bandes de fréquences connexes chacune à au moins une autre sous-bandes de fréquences dudit ensemble.

Plus particulièrement, le procédé est utilisé dans un réseau de communication cellulaire.

Plus particulièrement encore, les signaux sont émis sur une liaison sans fil.

Une autre mise en oeuvre intéressante est celle dans laquelle les signaux sont émis sur une fibre optique.

L'invention a aussi pour objet un dispositif de mise en oeuvre du procédé ci-dessus énoncé.

Notamment, le dispositif d'émission de signaux électromagnétiques reçus sur une ou plusieurs premières bandes de fréquences, comprend :
- une batterie de filtres ayant chacun une bande passante ;
- en entrée de chaque filtre, un premier convertisseur de fréquences amenant une première sous-bande d'une première bande de fréquences en intersection avec la bande passante du filtre auquel il est associé ;
- en sortie de chaque filtre, un deuxième convertisseur de fréquences amenant la bande passante du filtre auquel il est associé, dans une deuxième sous-bande d'une deuxième bande de fréquences.

Particulièrement, chaque premier convertisseur de fréquence est commandé par un générateur de consigne d'entrée de manière à amener en intersection avec la bande passante du filtre auquel il est associé, une première sous-bande de fréquences dans laquelle sont reçus des signaux utiles.

Particulièrement aussi, chaque filtre est commandé par un adaptateur de bande passante de manière à superposer la bande passante du filtre sur un segment de première sous-bande de fréquences.

Avantageusement, chaque deuxième convertisseur de fréquence est commandé par un générateur de consigne de sortie de manière à rendre la deuxième sous-bande de fréquences obtenue en sortie de filtre, à côté d'au moins une autre sous-bande de fréquences du deuxième ensemble de fréquences.

D'autres buts, caractéristiques, détails et avantages de l'invention apparaîtront dans la description qui suit d'un mode de réalisation préféré, non limitatif de l'objet et de la portée de la présente demande de brevet, accompagnée de dessins, dans lesquels :
- la figure 1 est une représentation schématique de réseau de télécommunication cellulaire ;
- la figure 2 est une représentation de transformation opérée par un procédé conforme à l'invention ;
- la figure 3 est une autre représentation de transformation opérée par un procédé conforme à l'invention ;
- les figures 4 à 7 montrent des étapes de procédé conforme à l'invention ;
- la figure 8 est une matrice de mise en oeuvre de procédé conforme à l'invention ; et
- la figure 9 est un schéma de dispositif conforme à l'invention.

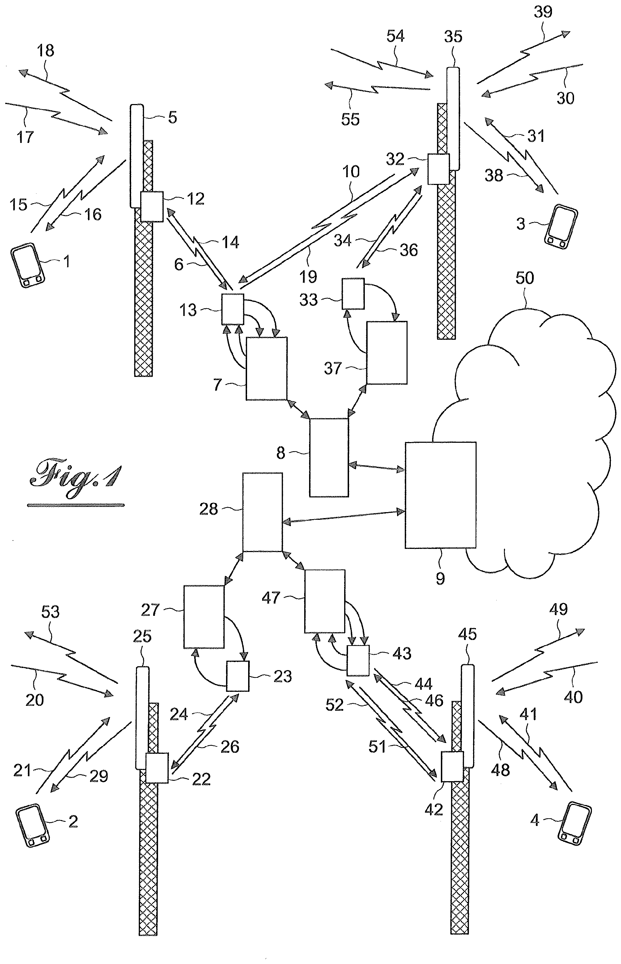

La figure 1 illustre un réseau d'accès de téléphonie mobile comprenant plusieurs antennes relais 5, 25, 35, 45 et un réseau coeur 50 de téléphonie mobile.

L'antenne 5 capte des signaux électromagnétiques sur des liens montants (uplink en anglais) 15, 17. Le lien montant 15 provient par exemple d'un terminal mobile 1. De manière duale, l'antenne 5 rayonne des signaux électromagnétiques sur des liens descendants (downlink en anglais) 16, 18. Le lien descendant 16 est par exemple destiné au terminal mobile 1. De manière semblable, les antennes 25, 35, 45 captent des signaux électromagnétiques sur des liens montants 20, 21, 30, 31, 54, 40, 41. Les liens montants 21, 31, 41 proviennent par exemple de terminaux mobiles 2, 3, 4. De même, les antennes 25, 35, 45 rayonnent des signaux électromagnétiques sur des liens descendants 29, 38, 39, 48, 49, 53, 55. Les liens descendants 29, 38, 48, sont par exemple destinés aux terminaux mobiles 2, 3, 4.

Dans le réseau d'accès, des stations de transmission radio 7, 27, 37, 47, par exemple de type Base Station / BTS (acronyme de l'expression anglaise Base Transceiver Station) ou NodeB, sont liés aux antennes 5, 25, 35, 45 pour émettre et recevoir les signaux électromagnétiques respectivement rayonnés et captés par les antennes. De manière connue, des stations de contrôle 8, 28, par exemple de type BSC (acronyme de l'expression anglaise Base Station Controller) ou RAN (Radio Access Network), gèrent chacun un groupe de stations de transmission. Dans le réseau coeur 50, des centres de commutation 9, par exemple de type MSC (acronyme de l'expression anglaise Mobile Switching Centre), supervisent des groupes de stations de contrôle.

Un système nommé WRRH (acronyme de l'expression anglaise Wireless Remote Radio Head) comprend un boîtier 12 à proximité immédiate de l'antenne 5 et un boîtier 13 à proximité immédiate de la station de transmission radio 7 pour établir un ou plusieurs liens montants sans fil 6 de l'antenne vers la station de transmission radio et un ou plusieurs liens descendants sans fil 14 de la station de transmission radio vers l'antenne, un boîtier 22 à proximité immédiate de l'antenne 25 et un boîtier 23 à proximité immédiate de la station de transmission radio 27 pour établir un ou plusieurs liens montants sans fil 26 de l'antenne vers la station de transmission radio et un ou plusieurs liens descendants sans fil 24 de la station de transmission radio vers l'antenne, un boîtier 32 à proximité immédiate de l'antenne 35 et un boîtier 33 à proximité immédiate de la station de transmission radio 37 pour établir un ou plusieurs liens montants sans fil 36 de l'antenne vers la station de transmission radio et un ou plusieurs liens descendants sans fil 34 de la station de transmission radio vers l'antenne, un boîtier 42 à proximité immédiate de l'antenne 45 et un boîtier 43 à proximité immédiate de la station de transmission radio 47 pour établir un ou plusieurs liens montants sans fil 46 de l'antenne vers la station de transmission radio et un ou plusieurs liens descendants sans fil 44 de la station de transmission radio vers l'antenne. Comme nous allons le voir dans la suite de la description, le procédé et le dispositif de l'invention sont particulièrement avantageux pour permettre au système WRRH, d'établir des liens entre une station de base (ou une partie de celle ci) et les antennes opérateur associées, au moyen de liaisons sans fil dont la ou les fréquences de fonctionnement sont différentes de celles utilisées couramment par l'opérateur. Un sous système du système WRRH, géré de manière autonome, peut être attribué à chaque station de transmission radio 27, 47 ou à un groupe de plusieurs stations de transmission radio 7, 37, par exemple pour permettre à la station de transmission radio d'émettre des signaux électromagnétiques vers l'antenne 35 par un lien 19 et de recevoir des signaux électromagnétiques depuis l'antenne 35 par un lien 10. Le sous système couvrant les stations de transmission radio 7 et 37, peut aussi couvrir tout ou partie des stations de transmission radio 27, 47, voire d'autres stations de transmission radio non représentés jusqu'à couvrir la totalité des stations de transmission radio du réseau d'accès.

Dans le système WRRH, les signaux captés par l'antenne dans la bande ou les bandes de fréquences de l'opérateur, sont filtrés, translatés en fréquence vers d'autres bandes de fréquences et réciproquement pour les signaux rayonnés par l'antenne. Ces autres bandes de fréquences sont des bandes permettant de créer un lien entre la station de base et l'antenne associée.

Dans le cadre des services/applications qu'il fournit, chaque opérateur se voit attribué le droit d'utiliser plusieurs bandes de fréquences, par exemple dans celles du GSM, de l'UMTS ou d'autres standards de communication mobile. L'ensemble de ces bandes de fréquences, est noté {F₁} dans la suite de la description.

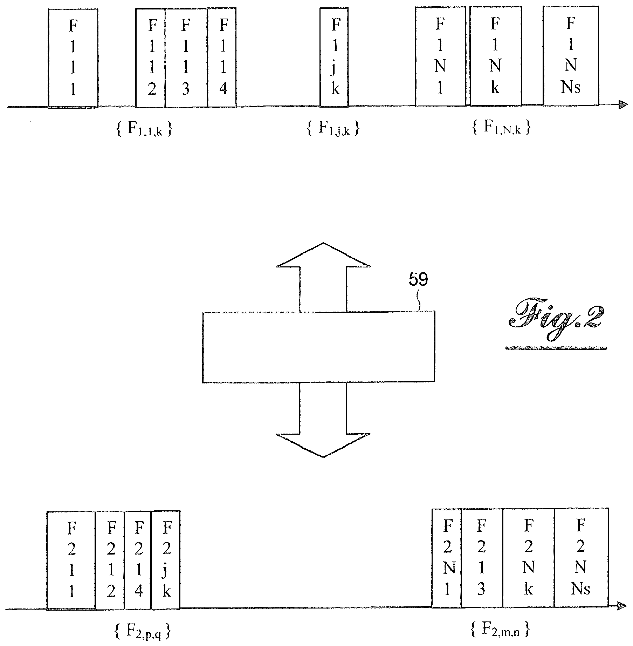

En référence à la figure 2, l'ensemble {F₁} comprend un nombre N de bandes de fréquences attribuées, de façon illustrative mais non limitative, à un opérateur A. Chaque bande de fréquences est partagée en sous-bandes de fréquences, parmi lesquelles seulement une partie forme un ensemble {F_{1,j,k}} comprenant un nombre Ns de sous-bandes de fréquences F_{1,j,k} allouées à l'opérateur A. Chaque sous-bande de fréquence est nommée F_{1,j,k} où le premier indice de valeur 1, indique que la sous-bande appartient à une bande de fréquences de l'ensemble de bandes de fréquences {F₁}, le deuxième indice j variant de 1 à N indique la bande de fréquences, c'est-à-dire l'ensemble {F_{1,j,k}} auquel appartient la sous-bande de fréquences et l'indice k variant de 1 à Ns, énumère les sous-bandes de fréquences de la bande de fréquence d'indice j.

L'espace entre les sous-bandes peut être occupé soit par un autre opérateur B, C, ..., soit par des applications sans rapport avec l'opérateur A.

Les sous-bandes élémentaires de fréquences allouées à ou utilisées par l'opérateur A dans une même bande de fréquences, peuvent former un spectre continu qui rassemble les sous-bandes élémentaires dans une sous-bande unique ou un spectre fragmenté qui dissémine les sous-bandes élémentaires dans plusieurs sous-bandes disjointes.

Le système WRRH utilise un ensemble de fréquences noté {F₂} dans la suite de la description, pour transporter les signaux appartenant à l'ensemble {F₁} entre la station de transmission radio (de type BTS, node B ou autre) et l'antenne de l'opérateur et inversement. L'ensemble de fréquences {F₂} est limité en termes de largeur de bande et peut être partagé avec d'autres applications n'ayant pas de rapport avec les applications de l'opérateur A.

Une solution qui consiste à translater directement la totalité des fréquences ou une bande de fréquences de l'ensemble {F₁} dans l'ensemble de fréquence {F₂}, est simple de mise en oeuvre mais contre performante en termes d'occupation spectrale.

Le procédé de l'invention applique une transformation 59 aux signaux à des fréquences dans les bandes de fréquences de l'ensemble {F₁} pour obtenir les signaux à des fréquences dans l'ensemble de fréquence {F₂} de façon à comprimer l'occupation spectrale dans l'ensemble de fréquence {F₂}. La transformation 59 est pilotée par des règles d'organisation, de sélection et d'optimisation des signaux issus de la bande {F₁} pour remplir efficacement le spectre de l'ensemble de fréquences {F₂}.

Les fréquences sont translatée par sous bandes, directement de l'ensemble {F₁} à l'ensemble de fréquences {F₂}, sans démoduler le signal, en d'autres termes sans avoir à connaître si la modulation du signal est en fréquence, en amplitude ou en phase ni à connaître le codage du signal sur la ou les porteuses, par exemple sauts de fréquences en CDMA ou en TD-CDMA. Les signaux sont translatés en fréquences sans avoir à en connaître le contenu. En d'autres termes, la translation de fréquence de chaque sous-bande est indépendante du signal en soi. Les sous-bandes de fréquences de divers opérateurs peuvent être translatées indépendamment les unes des autres.

Dans l'exemple illustré par la figure 2, les sous-bandes F_{1,1,1}, F_{1,1,2}, F_{1,1,4}, sont extraites en totalité de l'ensemble {F_{1,1,k}} et sont translatées vers respectivement les sous-bandes F_{2,1,1}, F_{2,1,2}, F_{2,1,4}, l'une à côté de l'autre dans l'ensemble {F_{2,p,q}} au sein de l'ensemble de fréquences {F₂}. La sous-bande F_{1,j,k}, (j≠1 λ j≠N) est extraite en totalité de l'ensemble {F_{1,j,k}} et est translatée vers la sous-bande F_{2,j,k}, à côté de la sous-bande F_{2,1,4}, dans l'ensemble {F_{2,p,q}} au sein de l'ensemble de fréquences {F₂}. La sous-bande F_{1,N,1}, est extraite en partie seulement de l'ensemble {F_{1,N,k}} et la partie, ou le segment, extraite est translatée vers la sous-bande F_{2,N,1}, dans l'ensemble {F_{2,m,n}} au sein de l'ensemble de fréquences {F₂}. La sous-bande F_{1,1,3}, est extraite en totalité de l'ensemble {F_{1,1,k}} et est translatée vers la sous-bande F_{2,1,3}, connexe à la sous-bande F_{2,N,1} dans l'ensemble {F_{2,m,n}} au sein de l'ensemble de fréquences {F₂}. Les sous-bandes F_{1,N,k}, F_{1,N,Ns}, sont extraites en totalité de l'ensemble {F_{1,N,k}} et sont translatées vers respectivement les sous-bandes F_{2,N,k}, F_{2,N,Ns}, connexes l'une à l'autre dans l'ensemble {F_{2,m,n}} au sein de l'ensemble de fréquences {F₂}.

La transformation 59 opère ainsi une défragmentation de l'ensemble {F₁} dans l'ensemble {F₂}.

La transformation 59 est aussi applicable en sens inverse aux signaux à des fréquences dans les bandes de fréquences de l'ensemble {F₂} pour obtenir les signaux à des fréquences dans l'ensemble de fréquence {F₁} de façon à expanser l'occupation spectrale dans l'ensemble de fréquences {F₁}. La transformation 59 opère alors réciproquement une fragmentation de l'ensemble {F₂} dans l'ensemble {F₁}.

Les explications qui précèdent reposent sur un réagencement des signaux dans d'autres bandes de fréquences en fonction de critères d'ordre fréquentiel, à savoir en fonction de la sous-bande de fréquence originelle du signal. D'autres critères peuvent être appliqués, par exemple en fonction de la polarisation du signal, d'ordre logique ou spatial. Dans un satellite, un critère d'ordre spatial serait utilisé pour renvoyer certaines fréquences sur un premier spot et d'autres fréquences sur un deuxième spot.

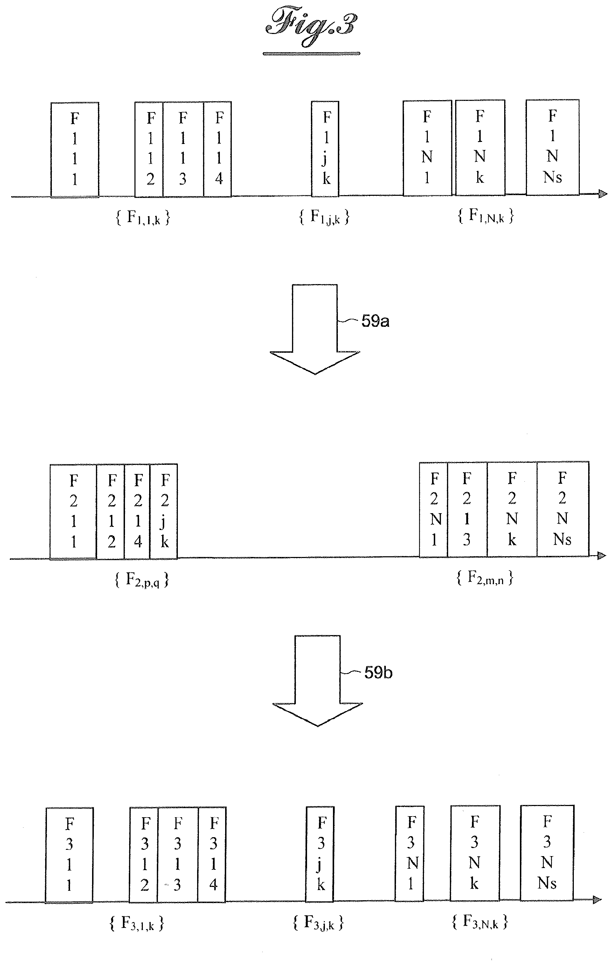

Dans le système WRRH illustré par la figure 1 où les fréquences appartenant à l'opérateur A doivent être transportées de l'antenne à la station de base et inversement, le procédé de l'invention est utilisé deux fois comme expliqué à présent sur la base de la figure 3.

Sur les liens montants (uplink en anglais) 15, 30, 31 les signaux de l'opérateur captés par les antennes 5, 35, par exemple respectivement dans les sous-bandes de fréquences F_{1,N,1}, F_{1,1,3}, F_{1,1,1}, sont organisés, filtrés et optimisés spectralement par une première transformation 59a de manière à être transportés sur les liens 6, 10, 36 de la liaison sans fil respectivement dans les sous-bandes de fréquences F_{2,N,1}, F_{2,1,3}, F_{2,1,1}. Une deuxième transformation 59b est ensuite appliquée aux signaux transportés sur les liens 6, 10, 36 de la liaison sans fil respectivement dans les sous-bandes de fréquences F_{2,N,1}, F_{2,1,3}, F_{2,1,1}, de façon à restituer dans la station de transmission radio 7, les signaux dans les sous-bandes de fréquences F_{3,N,1}, F_{3,1,3}, et dans la station de transmission radio 37, les signaux dans la sous-bande de fréquences F_{3,1,1}, dans un ensemble de fréquences {F₃}. L'ensemble de fréquences {F₃} peut aussi être le même ensemble que celui d'origine, ce qui permet de transporter un ensemble de fréquences dans un autre de taille plus petite.

Sur les liens descendants (downlink en anglais) 16, 38, 39 les signaux de l'opérateur destinés à être rayonnés par les antennes 5, 35, sont émis par les stations de transmission radio 7, 37 par exemple respectivement dans les sous-bandes de fréquences F_{1,N,k}, F_{1,N,Ns}, F_{1,1,2}. Les signaux émis sont organisés, filtrés et optimisés spectralement par la première transformation 59a de manière à être transportés sur les liens 14, 19, 34 de la liaison sans fil respectivement dans les sous-bandes de fréquences F_{2,N,k}, F_{2,N,Ns}, F_{2,1,2}. La deuxième transformation 59b est ensuite appliquée aux signaux transportés sur les liens 14, 19, 34 de la liaison sans fil respectivement dans les sous-bandes de fréquences F_{2,N,k}, F_{2,N,Ns}, F_{2,1,2}, de façon à restituer sur l'antenne 5, les signaux dans la sous-bande de fréquences F_{3,N,k}, et sur l'antenne 35, les signaux dans les sous-bandes de fréquences F_{3,N,Ns}, F_{3,1,2}, dans l'ensemble de fréquences {F₃}. L'ensemble de fréquences {F₃} peut ici encore être le même ensemble {F₁} que celui d'origine, ce qui permet de transporter un ensemble de fréquences dans un autre de taille plus petite.

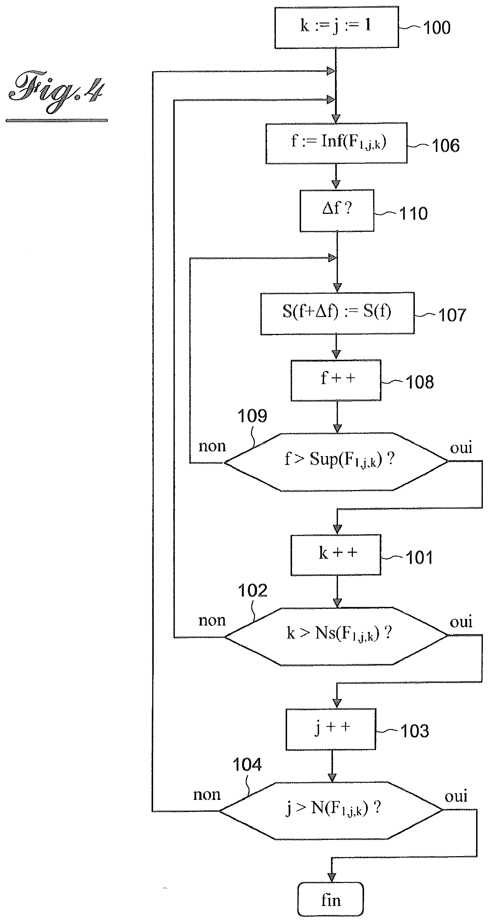

La figure 4 montre des étapes de procédé conforme à l'invention. Les bandes de fréquences attribuées à l'opérateur A sont considérées par une exécution d'étape initiale 100 qui pointe sur une première bande de fréquence d'indice j mis à 1 et par plusieurs exécutions de préférence parallèles d'une étape 103 qui pointent chacune sur une valeur de différente de j comprise entre 1 et N sous le contrôle d'une étape 104. Dans chaque bande de fréquences considérée, les sous-bandes de fréquences F_{1,j,k}, allouées à et/ou utilisées par l'opérateur sont sélectionnées par l'exécution de l'étape initiale 100 pour la première bande de fréquences et par plusieurs exécutions de préférence parallèles d'une étape 101 qui pointent chacune sur une valeur différente de k comprise entre 1 et Ns, propre à chaque bande de fréquence sous le contrôle d'une étape 102 qui adapte la valeur du nombre Ns à la bande de fréquences dans laquelle est effectuée la sélection.

Les fréquences f comprises entre une borne inférieure Inf (F_{1,j,k}) observée dans une étape 106 et une borne supérieure Sup(F_{1,j,k}) de chaque sous-bande de fréquences F_{1,j,k} sélectionnée, observée dans une étape 109, sont parcourues par une étape 108 de façon à prélever un signal S(f) à la fréquence f et à le translater à une fréquence f+Δf dans une étape 107.

Dans le mode de mise en oeuvre présenté sur la figure 4, la valeur de translation en fréquence Δf est déterminée dans une étape 110 pour l'ensemble des fréquences de la bande de fréquences sélectionnée.

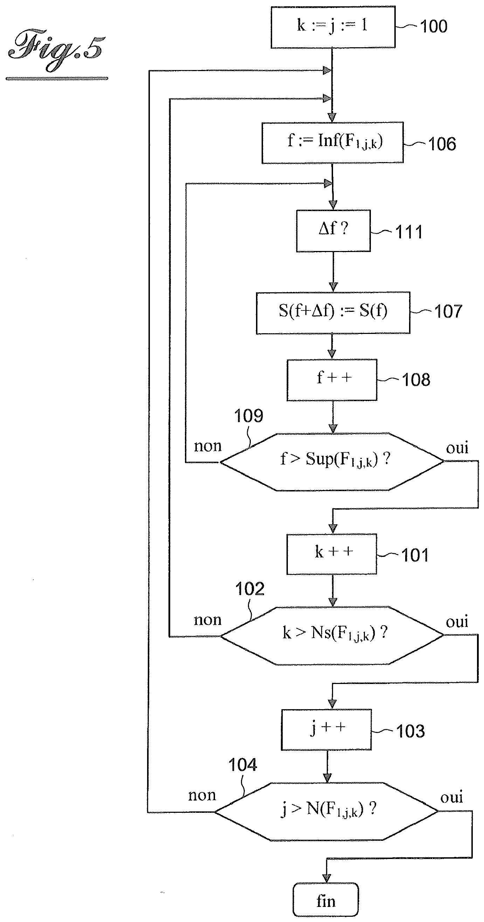

Dans le mode de mise en oeuvre présenté sur la figure 5, la valeur de translation en fréquence Δf est déterminée dans une étape 111 différemment pour différentes fréquences de l'ensemble des fréquences de la bande de fréquences sélectionnée.

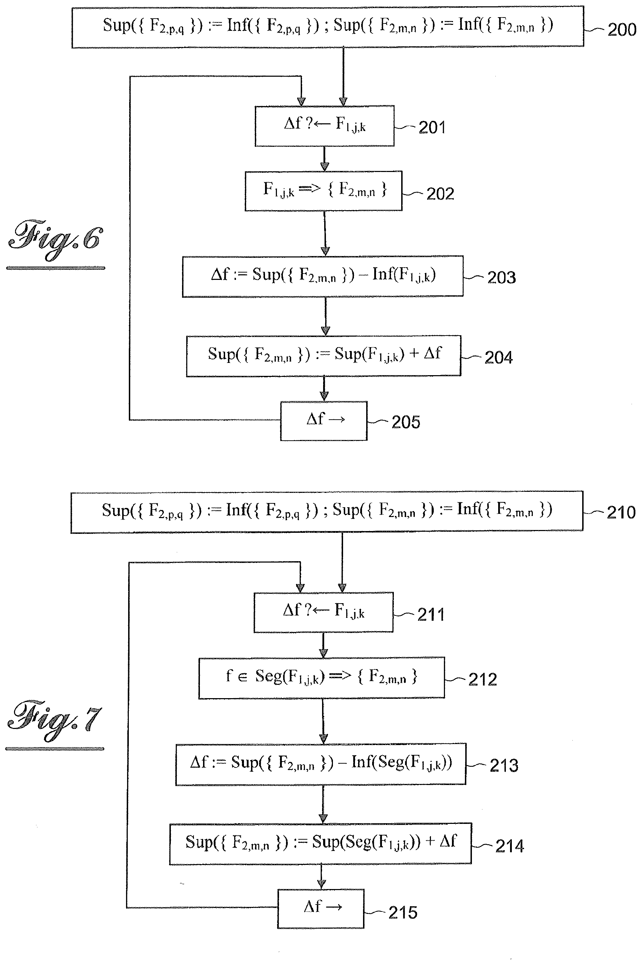

La détermination de la translation de fréquence Δf dans l'étape 110, est illustrée par les étapes 200 à 205 représentées en figure 6.

Un ou plusieurs ensembles de sous-bandes de fréquences d'arrivée {F_{2,p,q}}, {F_{2,m,n}} sont préalablement définis par exemple par leur borne inférieure en fréquence Inf({F_{2,p,q}}), Inf ({F_{2,m,n}}). Dans une étape 200, les ensembles de sous-bandes de fréquences sont initialisés à des ensembles vides en positionnant des valeurs de bornes supérieures Sup({F_{2,p,q}}), Sup({F_{2,m,n}}) égales aux valeurs de bornes inférieures Inf({F_{2,p,q}}), Inf({F_{2,m,n}}) de ces ensembles.

Pour chaque valeur requise de translation de fréquence Δf à partir d'une sous bande de fréquences F_{1,j,k} dans une exécution d'étape 201 déclenchée par l'étape 110, une étape 205 génère une valeur de translation de fréquence Δf. Entre les étapes 201 et 205, une ou plusieurs étapes exécutent chacune une règle qui fait dépendre la valeur de translation de fréquence Δf de la sous-bande de fréquences F_{1,j,k} à laquelle elle s'applique.

Une étape 202 exécute par exemple une règle d'organisation qui consiste à attribuer un ensemble d'arrivée {F_{2,m,n}} à la sous-bande de fréquences F_{1,j,k}, unique pour l'ensemble des sous-bandes sélectionnées ou différent, par exemple en fonctions de critères logiques préétablis sur les émetteurs ou sur les destinataires des signaux, sur les débits d'information accordés, sur les protocoles de communication, sur la sémantique du contenu ou autres.

Une étape 203 exécute par exemple une règle d'optimisation qui consiste à translater la borne inférieure Inf(F_{1,j,k}) de la sous bande de fréquence F_{1,j,k} de façon à la faire coïncider avec la borne supérieure Sup({F_{2,m,n}}) à une marge de sécurité près.

Une étape 204 associée à l'étape 203 réactualise alors la borne supérieure Sup({F_{2,m,n}}) pour prendre en compte l'ajout de la sous-bande F_{1,j,k} translatée dans l'ensemble {F_{2,m,n}}.

La détermination de la translation de fréquence Δf dans l'étape 111, est illustrée par les étapes 210 à 215 représentées en figure 7.

Un ou plusieurs ensembles de sous-bandes de fréquences d'arrivée {F_{2,p,q}}, {F_{2,m,n}} sont ici aussi préalablement définis par exemple par leur borne inférieure en fréquence Inf({F_{2,p,q}}), Inf({F_{2,m,n}}). Dans une étape 210, les ensembles de sous-bandes de fréquences sont initialisés à des ensembles vides en positionnant des valeurs de bornes supérieures Sup({F_{2,p,q}}), Sup({F_{2,m,n}}) égales aux valeurs de bornes inférieures Inf({F_{2,p,q}}), Inf({F_{2,m,n}}) de ces ensembles.

Pour chaque valeur requise de translation de fréquence Δf à partir d'une sous bande de fréquences F_{1,j,k} dans une exécution d'étape 211 déclenchée par l'étape 111, une étape 215 génère une valeur de translation de fréquence Δf. Entre les étapes 211 et 215, une ou plusieurs étapes exécutent chacune une règle qui fait dépendre la valeur de translation de fréquence Δf d'un segment Seg(F_{i,j,k}) de la sous-bande de fréquences F_{1,j,k} auquel elle s'applique.

Une étape 212 exécute par exemple une règle d'organisation qui consiste à attribuer un ensemble d'arrivée {F_{2,m,n}} au segment Seg(F_{1,j,k}), unique pour l'ensemble des segment, voire des sous-bandes sélectionnées ou différent, par exemple en fonctions de critères logiques préétablis sur les émetteurs ou sur les destinataires des signaux, sur les débits d'information accordés, sur les protocoles de communication, sur la sémantique du contenu ou autres.

Une étape 213 exécute par exemple une règle d'optimisation qui consiste à translater la borne inférieure Inf (Seg (F_{1,j,k})) du segment de fréquences Seg(F_{1,j,k}) de façon à la faire coïncider avec la borne supérieure Sup({F_{2,m,n}}) à une marge de sécurité près.

Une étape 214 associée à l'étape 213 réactualise alors la borne supérieure Sup({F_{2,m,n}}) pour prendre en compte l'ajout du segment Seg(F_{1,j,k}) translaté dans l'ensemble {F_{2,m,n}}.

Les étapes qui viennent d'être décrites peuvent être exécutées in extenso en temps réel ou en temps masqué.

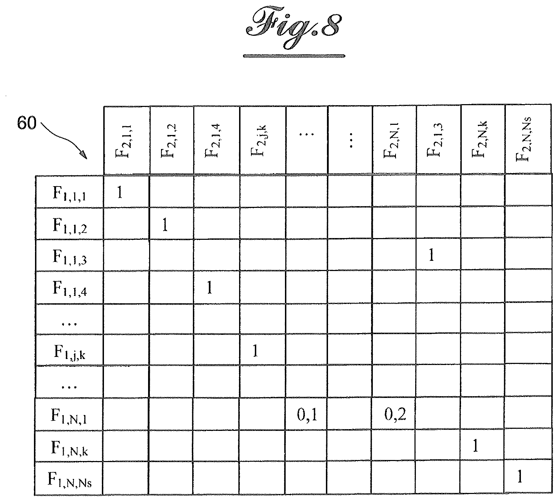

La figure 8 montre une matrice 60 utile pour la mise en oeuvre du procédé de l'invention.

Chaque ligne de la matrice 60 est dédiée à une sous-bande de fréquences d'entrée F_{1,j,k} dans l'ensemble {F₁}. Chaque colonne de la matrice 60 est dédiée à une sous-bande de fréquences de sortie F_{2,m,n} dans l'ensemble {F₂} .

A l'intersection d'une ligne et d'une colonne, la valeur 1 signifie qu'un segment couvrant la totalité de la largeur de la sous-bande de fréquences, est translaté. Une valeur comprise entre 0 et 1 signifie que seul un segment couvrant une partie de largeur de la sous-bande de fréquences est translaté. Par exemple, une valeur de 0,2 signifie que seul un segment couvrant 20% de largeur de la sous-bande de fréquences est translaté.

Sur la figure 8, il est possible de savoir quel segment de l'ensemble de fréquence {F1} est transporté par quel segment de l'ensemble de fréquences {F2}.

Par exemple le segment couvrant la totalité de la largeur de la sous-bande de fréquences F_{1,1,1} est transporté entièrement sur un segment de la sous-bande de fréquences F_{2,1,1}.

Dans une sous-bande de fréquences, seule une partie des signaux peut éventuellement être utilisée à un instant t. De manière à optimiser le plus finement possible le spectre de fréquences dans l'ensemble de fréquence {F2}, uniquement le ou les segments de la sous-bande utile, sera ou seront traité(s). L'introduction dans la matrice 60 d'organisation, de sélection et d'optimisation de valeurs inférieures à 1 permet alors d'optimiser le rangement des signaux effectivement utilisés dans le spectre de sortie.

Par exemple un segment couvrant 20% de la sous-bande de fréquences P_{1,N,1} est transporté sur un segment de la sous-bande de fréquences F_{2,N,1}.

La sous-bande de fréquences F_{2,N,1} peut ainsi être découpée en plusieurs segments pour être transportés sur autant de segments de l'ensemble de fréquences {F2}.

Nous venons de décrire un procédé qui, pour émettre des signaux électromagnétiques reçus sur une ou plusieurs premières bandes de fréquences, applique aux signaux une transformation 59 en effectuant des actions de:
- sélection de premières sous-bandes de fréquences formant un premier ensemble {F_{1,1,k}} de sous-bandes de fréquences de la ou les dites premières bandes de fréquences ;
- association pilotée par des règles d'organisation, à chaque première sous-bande de fréquences F_{1,1,k}, F_{1,1,2}, F_{1,1,3}, F_{1,1,4} formant ledit premier ensemble, d'un ou plusieurs deuxièmes ensembles {F_{2,p,q}}, {F_{2,m,n}} de sous-bandes de fréquences F_{2,1,k}, F_{2,1,2}, F_{2,1,3}, F_{2,1,4} formant une ou plusieurs deuxièmes bandes de fréquences ;
- détermination pilotée par des règles d'optimisation, de translations de fréquence pour transposer les signaux reçus dans les premières sous-bandes de fréquences en signaux émis dans la ou les deuxièmes bandes de fréquences.

Le procédé de l'invention peut être mis en oeuvre de manière logicielle au moyen de microprogrammes exécutables par des processeurs de traitement numérique du signal (DSP pour Digital Signal Processor) dans les bandes de fréquences compatibles avec la fréquence de cadencement des processeurs.

Le procédé de l'invention peut aussi être mis en oeuvre au moyen de dispositifs matériels utilisant des composants analogiques de types filtres, commutateurs (switch en anglais), mélangeur, ou autres, par exemple pour un plan de fréquence simple.

Pour des plans de fréquences simples ou complexes, des architectures numériques peuvent être construites en combinant divers composants électroniques dans des chaînes comprenant des convertisseurs analogique-numériques (ADC pour analog digital converter en anglais) et numérique-analogiques (DAC pour digital analog converter en anglais), suivis par des convertisseurs de fréquence en bande de base (DDC pour digital down converter en anglais), des oscillateurs numériquement contrôlés (NCO pour Numerically Controlled Oscillator en anglais), puis des filtres numériques suivis à leurs tours par des convertisseurs élévateurs de fréquence (DUC pour digital up converter) et à nouveau des NCO. La mise en oeuvre peut se faire avec des composants dédiés ou avec des circuits de ports programmables (FPGA pour field-programmable gate array en anglais), des DSP ou des circuits intégrés dédiés (ASIC pour Application-specific integrated circuit en anglais)) dont les fonctions permettent de filtrer et/ou de translater en fréquence des segments utiles et/ou non utiles.

Les solutions analogiques et numériques peuvent être combinées.

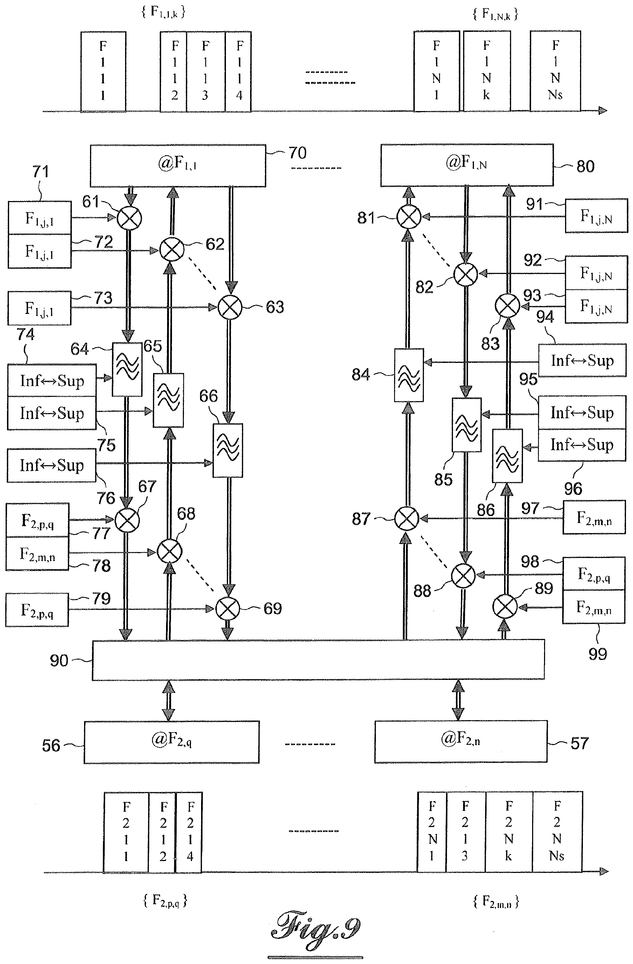

La figure 9 donne un schéma possible de dispositif conforme à l'invention.

Un module d'interface 70, 80 est accordé sur chacune des N bandes de fréquences {F_{1,j,k}} de la bande {F_{1,j,1}} à la bande {F_{1,j,N}}.

Dans l'exemple illustré par la figure 9, le dispositif d'émission de signaux électromagnétiques reçus sur des premières bandes de fréquences (F_{1,j,1}}, {F_{1,j,N}}, comprend en aval du module d'interface 70 une batterie de filtres 64, 66 ayant chacun une bande passante prédéterminée ou une bande passante ajustable par un adaptateur de bande passante 74, 76 de manière à superposer la bande passante du filtre sur un segment de première sous-bande de fréquences et en aval du module d'interface 80 une batterie de filtres 82 ayant chacun une bande passante prédéterminée ou une bande passante ajustable par un adaptateur de bande passante 95 de manière à superposer la bande passante du filtre sur un segment d'une autre première sous-bande de fréquences. Les filtres variables sont réalisables par des filtres numériques ou des barrettes de filtres analogiques avec commutateurs.

Les adaptateurs de bande passante 74, 76, 95 sont par exemple paramétrables à partir de l'étape 212 du procédé exécutée par exemple dans un calculateur de supervision non représenté.

Disposé entre le module d'interface 70, 80 et l'entrée de chaque filtre 64, 66, 85, un premier convertisseur de fréquences 61, 63, 82 est dimensionné pour amener une première sous-bande F_{1,j,k} de première bande de fréquences en intersection avec la bande passante du filtre auquel il est associé. Le convertisseur de fréquence est réalisé par un mélangeur analogique ou un NCO pour effectuer un changement de fréquence telle que la sous-bande F_{1,j,k} coïncide (mapping en anglais) après conversion avec la bande passante du filtre. La conversion ou translation de fréquence est ici encore prédéterminée ou ajustable par un générateur de consigne d'entrée 71, 73, 92 de manière à amener en intersection avec la bande passante du filtre auquel il est associé, la première sous-bande de fréquences dans laquelle sont reçus des signaux estimés utiles.

Les générateur de consigne d'entrée 71, 73, 92 sont par exemple paramétrables à partir des étapes 100 et 101 du procédé exécutées par exemple dans le calculateur de supervision.

Les premiers convertisseurs, commandés ou non par les premiers générateurs de consigne, en combinaison avec les filtres commandés ou non par les adaptateurs de bande passante, constituent ainsi des moyens de sélection des sous-bandes de fréquences.

En sortie de chaque filtre 64, 66, 85, un deuxième convertisseur de fréquences 67, 69, 88, est dimensionné pour amener la bande passante du filtre auquel il est associé, dans une deuxième sous-bande d'une deuxième bande de fréquences {F_{2,p,q}}, {F_{2,m,n}}.

Le convertisseur de fréquence est réalisé par un mélangeur analogique ou un NCO pour effectuer un changement de fréquence tel que la sous-bande F_{i,j,k} coïncide (mapping en anglais) après conversion avec une sous-bande du deuxième ensemble de fréquences en sortie de filtre. La conversion ou translation de fréquence est ici encore prédéterminée ou ajustable par un générateur de consigne de sortie 77, 79, 98 de manière à rendre la deuxième sous-bande de fréquences obtenue en sortie de filtre, connexe à au moins une autre sous-bande de fréquences du deuxième ensemble de fréquences.

Les générateur de consigne de sortie 77, 79, 98 sont par exemple paramétrables à partir des étapes 203 ou 213 du procédé exécutées dans le calculateur de supervision.

Les deuxièmes convertisseurs, commandés ou non par les deuxièmes générateurs de consigne, en combinaison avec les filtres commandés ou non par les adaptateurs de bande passante, constituent ainsi des moyens d'association de deuxièmes sous-bandes de fréquences aux premières sous sous-bandes de fréquences et de translations de fréquence pour transposer les signaux reçus.

Un module 90 de sommation et de routage aiguille ensuite les signaux en sortie de deuxièmes convertisseurs vers des modules d'interfaces 56, 57 dédiés par exemple chacun à une bande de fréquences du deuxième ensemble {F₂}, voire au médium destiné à l'émission des signaux.

Par exemple, lorsque le dispositif décrit est installé dans le boîtier 42, respectivement dans le boîtier 43 du système WRRH, le module 56 est dédié au lien sans fil 52, respectivement 51 et le module 57 est dédié au lien sans fil 46, respectivement 44.

Par exemple, lorsque le dispositif décrit est installé dans le boîtier 13, respectivement dans le boîtier 32 du système WRRH, le module 56 est dédié au lien sans fil 14, respectivement 10 et le module 57 est dédié au lien sans fil 19, respectivement 36.

Le module 90 de chaque dispositif installé dans les boîtiers 12, 13, 32, 33 est de préférence géré par le calculateur de supervision.

Comme déjà expliqué ci-dessus dans la description, le procédé est réversible, il en est de même du dispositif.

Le module 90 de sommation et de routage aiguille en sens inverse, les signaux reçus des modules d'interfaces 56, 57 dédiés par exemple chacun à une bande de fréquences du deuxième ensemble {F₂}, à destination du module 70, 80 dédié à la bande passante du premier ensemble {F₁}, dans laquelle réémettre les signaux reçus.

Par exemple, lorsque le dispositif décrit est installé dans le boîtier 42, respectivement dans le boîtier 43 du système WRRH, le module 56 est dédié au lien sans fil 51, respectivement 52 par exemple pour le GSM, et le module 57 est dédié au lien sans fil 44, respectivement 46 par exemple pour l'UMTS. Dans le dispositif installé dans le boîtier 42, les signaux reçus sur le lien 51 par le module 56 dans la bande de fréquences {F_{2,p,q}} sont aiguillés à destination du module 70 accordé sur une bande radiofréquences du GSM. Les signaux reçus sur le lien 44 par le module 57 dans la bande de fréquences {F_{2,m,n}} sont aiguillés à destination du module 80 accordé sur une bande radiofréquences de l'UMTS.

Par exemple, lorsque le dispositif décrit est installé dans le boîtier 32 du système WRRH, le module 56 est dédié au lien sans fil 19 de communication avec le boîtier 13, et le module 57 est dédié au lien sans fil 34 de communication avec le boîtier 33. Des signaux parmi les signaux reçus sur le lien 19 par le module 56 dans la bande de fréquences {F_{2,p,q}} concernent par exemple le terminal mobile 1 en phase de changement d'affiliation (handover en anglais) de l'antenne 5 vers l'antenne 35, ils sont alors aiguillés à destination du module 70 accordé sur une bande radiofréquences comprenant une sous-bande F_{1,1,k} attribuable au terminal mobile 1. Des signaux parmi les signaux reçus sur le lien 34 par le module 57 dans la bande de fréquences {F_{2,m,n}} concernent par exemple le terminal mobile 3 sous couverture de l'antenne 35, ils sont aiguillés à destination du module 80 accordé sur une bande radiofréquences de communication avec le terminal mobile 3.

L'homme du métier déduira aisément d'autres applications possibles comme par exemple celle de la gestion de macro diversité.

Dans l'exemple illustré par la figure 9, le dispositif d'émission de signaux électromagnétiques reçus sur les bandes de fréquences {F_{2,p,q}}, {F_{2,m,n}}, comprend en aval du module 90 une batterie de filtres 65, 84, 86 ayant chacun une bande passante prédéterminée ou une bande passante ajustable par un adaptateur de bande passante 75, 94, 96 de manière à superposer la bande passante du filtre sur un segment de sous-bande de fréquences d'entrée. Les filtres variables sont réalisables par des filtres numériques ou des barrettes de filtres analogiques avec commutateurs.

Les adaptateurs de bande passante 75, 94, 96 sont par exemple paramétrables à partir de l'étape 212 du procédé exécutée par exemple dans le calculateur de supervision non représenté.

Disposé entre le module 90 et l'entrée de chaque filtre 65, 84, 86, un premier convertisseur de fréquences 68, 87, 89 est dimensionné pour amener une première sous-bande F_{2,m,n} de première bande de fréquences en intersection avec la bande passante du filtre auquel il est associé. Le convertisseur de fréquence est réalisé par un mélangeur analogique ou un NCO pour effectuer un changement de fréquence telle que la sous-bande F_{2,m,n} coïncide (mapping en anglais) après conversion avec la bande passante du filtre. La conversion ou translation de fréquence est ici encore prédéterminée ou ajustable par un générateur de consigne d'entrée 78, 87, 99 de manière à amener en intersection avec la bande passante du filtre auquel il est associé, la première sous-bande de fréquences dans laquelle sont reçus des signaux estimés utiles.

Les générateur de consigne d'entrée 78, 87, 99 sont par exemple paramétrables à partir des étapes 100 et 101 du procédé exécutées dans le calculateur de supervision.

Les premiers convertisseurs, commandés ou non par les premiers générateurs de consigne, en combinaison avec les filtres commandés ou non par les adaptateurs de bande passante, constituent ainsi des moyens de sélection des sous-bandes de fréquences.

En sortie de chaque filtre 65, 84, 86, un deuxième convertisseur de fréquences 62, 81, 83, est dimensionné pour amener la bande passante du filtre auquel il est associé, dans une deuxième sous-bande d'une deuxième bande de fréquences {F_{1,1,k}}, {F_{1,N,k}}.

Le convertisseur de fréquence est réalisé par un mélangeur analogique ou un NCO pour effectuer un changement de fréquence tel que la sous-bande F_{2,m,n} coïncide (mapping en anglais) après conversion avec une sous-bande du deuxième ensemble de fréquences en sortie de filtre. La conversion ou translation de fréquence est ici encore prédéterminée ou ajustable par un générateur de consigne de sortie 72, 91, 93 de manière à rendre la deuxième sous-bande de fréquences obtenue en sortie de filtre, connexe à au moins une autre sous-bande de fréquences du deuxième ensemble de fréquences.

Les générateur de consigne de sortie 72, 91, 93 sont par exemple paramétrables à partir des étapes 203 ou 213 du procédé exécutées dans le calculateur de supervision.

Les deuxièmes convertisseurs, commandés ou non par les deuxièmes générateurs de consigne, en combinaison avec les filtres commandés ou non par les adaptateurs de bande passante, constituent ainsi des moyens d'association de deuxièmes sous-bandes de fréquences aux premières sous sous-bandes de fréquences et de translations de fréquence pour transposer les signaux reçus.

Sur la figure 9, les pointillés entre les convertisseurs 62 et 63, 68 et 69 ou 81 et 82, 87 et 88, indique que plusieurs chemins montants ou descendants sont possibles. Le schéma de la figure 2 est simplement un exemple parmi d'autres. Le dispositif représenté peut aussi ne comprendre que des flèches descendantes.

La configuration spectrale peut être statique, reconfigurable ou dynamique. Le comportement dynamique peut dépendre de différents paramètres, par exemple de la qualité de service (QoS pour quality of service en anglais), de l'utilisation du spectre, des interférences, de règles d'utilisation du spectre, d'évolutions du réseau, de modification du spectre, ou autres. Le système peut aussi intégrer des méthodes d'auto-détection, par exemple de collisions ou de saturation, permettant automatiquement de se reconfigurer.

L'homme du métier appréciera que les principes et moyens qui viennent d'être expliqués pour un cas mono-secteur, mono-opérateur sont facilement adaptables pour s'appliquer aussi à des applications multi-secteurs et/ou multi-opérateurs. A titre illustratif et non limitatif, une sélection de sous-bandes de fréquences de réception peut se faire par exemple pour un premier opérateur A puis pour un deuxième opérateur B, puis un troisième opérateur C et ainsi de suite pour plusieurs opérateurs.

L'homme du métier appréciera que les principes et moyens qui viennent d'être expliqués sont facilement adaptables pour s'appliquer à d'autres applications dès lors que le RRH « Remote Radio Head » ou le module ODU « Outdoor Radio Unit en anglais », par exemple dans le cas de faisceaux Hertzien, est utilisable avec un lien sans fil en lieu et place d'un lien coaxial ou fibre optique. Le principe peut aussi s'appliquer à un ensemble de longueurs d'onde optique {λi} par exemple dans le cadre de techniques radio par fibre optique (radio-over-fiber en anglais).

## Revendications

1. Procédé d'émission de signaux électromagnétiques reçus sur une ou plusieurs premières bandes de fréquences, **caractérisé en ce qu'**il comprend des étapes de :
- pour des premières sous-bandes de fréquences formant un premier ensemble ({F_{1,j,k}}) de sous-bandes de fréquences de la ou les dites premières bandes de fréquences, association (202, 212) pilotée par des règles, à chaque première sous-bande de fréquences formant ledit premier ensemble, d'un ou plusieurs deuxièmes ensembles ({F_{2,m,n}}) de sous-bandes de fréquences dans une ou plusieurs deuxièmes bandes de fréquences, par une détermination (203, 213) pour chaque première sous-bande de fréquences, d'une translation de fréquence (Δf), les règles comprenant des règles de construction d'un deuxième ensemble ({F_{2,m,n}}) de sous-bandes de fréquences, les sous-bandes du deuxième ensemble étant à côté d'au moins une autre sous-bandes de fréquences dudit ensemble, pour optimiser le remplissage de la ou des deuxièmes bandes de fréquences avec les sous-bandes du deuxième ensemble,
et transposition des signaux reçus dans les premières sous-bandes de fréquences en signaux émis dans les deuxièmes sous-bandes de fréquences associées.

2. Procédé selon la revendication 1, **caractérisé en ce que** la ou les premières bandes de fréquence constituent un ensemble de fréquences attribué à un opérateur d'une antenne, tandis que la deuxième bande de fréquences est utilisée pour transmettre, entre l'antenne et une station de transmission radio, les signaux reçus par l'antenne sur la ou les premières bandes de fréquences, ladite association pilotée étant appliquée uniquement à des sous-bandes de fréquences dans lesquelles sont reçus des signaux électromagnétiques estimés utiles par l'opérateur de l'antenne.

3. Procédé selon la revendication 1 ou 2, **caractérisé en ce que** les règles comprennent des règles consistant à associer une deuxième sous-bande de fréquences à un segment couvrant tout ou partie d'une première sous-bande de fréquences.

4. Procédé selon l'une des revendications précédentes, **caractérisé en ce qu'**il est utilisé dans un réseau de communication cellulaire.

5. Procédé selon l'une des revendications précédentes, **caractérisé en ce que** les signaux sont émis sur une liaison sans fil.

6. Procédé selon l'une des revendications 1 à 4, **caractérisé en ce que** les signaux sont émis sur une fibre optique.

7. Dispositif d'émission, dans une ou plusieurs deuxièmes bandes de fréquences, de signaux électromagnétiques reçus sur une ou plusieurs premières bandes de fréquences, **caractérisé en ce qu'**il comprend :
- une batterie de filtres (64, 66, 85) ayant chacun une bande passante ;
- en entrée de chaque filtre (64, 66, 85), un premier convertisseur de fréquences (61, 63, 82) transposant les signaux reçus sur une première sous-bande de fréquences de la ou des premières bandes de fréquence sur la bande passante du filtre auquel il est associé ;
- en sortie de chaque filtre (64, 66, 85), un deuxième convertisseur de fréquences (67, 69, 88) appliquant une translation de fréquences déterminée, en transposant les signaux de la bande passante du filtre auquel il est associé, dans une deuxième sous-bande de la deuxième bande de fréquences,
la translation de fréquences étant déterminée de manière à optimiser le remplissage de la deuxième bande de fréquences avec les sous-bandes associées aux sous-bandes de la ou des premières bandes de fréquences, par construction d'un deuxième ensemble ({F_{2,m,n}}) de sous-bandes de fréquences, les sous-bandes du deuxième ensemble étant à côté d'au moins une autre sous-bandes de fréquences dudit deuxième ensemble.

8. Dispositif selon la revendication 7, **caractérisé en ce que** la ou les premières bandes de fréquence constituent un ensemble de fréquences attribué à un opérateur d'une antenne, tandis que la deuxième bande de fréquences est utilisée pour transmettre, entre l'antenne et une station de transmission radio, les signaux reçus par l'antenne sur la ou les premières bandes de fréquences, et chaque premier convertisseur de fréquence (61, 63, 82) est commandé par un générateur de consigne d'entrée (71, 73, 92) de manière à amener en intersection avec la bande passante du filtre auquel il est associé, une première sous-bande de fréquences dans laquelle sont reçus des signaux estimés utiles par l'opérateur de l'antenne.

9. Dispositif selon la revendication 7 ou 8, **caractérisé en ce que** chaque filtre (64, 66, 85) est commandé par un adaptateur de bande passante (74, 76, 95) de manière à superposer la bande passante du filtre sur un segment de première sous-bande de fréquences.

10. Dispositif selon l'une des revendications 7 à 9, **caractérisé en ce que** chaque deuxième convertisseur de fréquence (67, 69, 88) est commandé par un générateur de consigne de sortie (77, 79, 98) de manière à rendre la deuxième sous-bande de fréquences obtenue en sortie de filtre, à côté d'au moins une autre sous-bande de fréquences du deuxième ensemble de fréquences.

## Patentansprüche

1. Verfahren zum Senden elektromagnetischer Signale, die auf einem ersten oder mehreren Frequenzbändern empfangen werden, **dadurch gekennzeichnet, dass** es folgende Schritte umfasst:
- für erste Frequenzunterbänder, die eine erste Einheit ({F_{1,j,k}}) von Frequenzunterbändern des oder der ersten Frequenzbänder bilden, durch Regel gesteuertes Zuordnen (202, 212) einer oder mehrerer zweiter Einheiten von Frequenzunterbändern ({F_{2,m,n}}) in einem oder mehreren Frequenzbändern zu jedem ersten Frequenzunterband, das die erste Einheit bildet, durch Bestimmen (203, 213) einer Frequenztranslation (Δf) für jedes erste Frequenzunterband, wobei die Regeln Regel zur Bildung einer zweiten Einheit ({F_{2,m,n}}) von Frequenzunterbändern umfassen, wobei die Unterbänder der zweiten Einheit neben mindestens einem anderen Frequenzunterband der Einheit liegen, um die Füllung des oder der zweiten Frequenzbänder mit den Unterbändern der zweiten Einheit zu optimieren,
und Transposition der in den ersten Frequenzunterbändern empfangenen Signale in Signale, die in den zugeordneten zweiten Frequenzunterbändern gesendet werden.

2. Verfahren nach Anspruch 1, **dadurch gekennzeichnet, dass** das oder die ersten Frequenzbänder eine Einheit darstellen, die einem Antennenbetreiber zugewiesen wird, während das zweite Frequenzband dazu benutzt wird, um zwischen der Antenne und einem Radiosender die von der Antenne auf dem oder den ersten Frequenzbändern empfangenen Signale zu senden, wobei die gesteuerte Zuordnung ausschließlich auf Frequenzunterbänder angewendet wird, in denen elektromagnetische Signale empfangen worden sind, die der Antennenbetreiber für nützlich hält.

3. Verfahren nach Anspruch 1 oder 2, **dadurch gekennzeichnet, dass** die Regeln Regel umfassen, die darin bestehen, ein zweites Frequenzunterband einem Segment zuzuordnen, das ein erstes Frequenzunterband ganz oder teilweise überdeckt.

4. Verfahren nach einem der vorstehenden Ansprüche, **dadurch gekennzeichnet, dass** es in einem Mobilfunknetz verwendet wird.

5. Verfahren nach einem der vorstehenden Ansprüche, **dadurch gekennzeichnet, dass** die Signale über eine drahtlose Verbindung gesendet werden.

6. Verfahren nach einem der Ansprüche 1 - 4, **dadurch gekennzeichnet, dass** die Signale über Lichtwellenleiter (LWL) gesendet werden.

7. Vorrichtung zum Senden von elektromagnetischen Signalen, die auf einem ersten oder mehreren Frequenzbändern empfangen werden, in einem oder mehreren zweiten Frequenzbändern, **dadurch gekennzeichnet, dass** sie umfasst:
- eine Filterbank (64, 66, 85), wobei jedes dazugehörige Filter eine Bandbreite aufweist;
einen ersten Frequenzwandler (61, 63, 82) am Eingang jedes Filters (64, 66, 85), der die auf einem ersten Frequenzunterband von dem oder den ersten Frequenzbändern empfangenen Signale auf die Bandbreite des diesem zugeordneten Filters umsetzt;
- einen zweiten Frequenzwandler (67, 69, 88) am Ausgang jedes Filters (64, 66, 85), der eine vorgegebene Frequenztranslation anwendet, indem er die Signale der Bandbreite des Filters, dem er zugeordnet ist, in ein zweites Unterband des zweiten Frequenzbandes umsetzt,
wobei die Frequenztranslation derart vorgegeben wird, dass die Füllung des zweiten Frequenzbandes mit den Unterbändern, die den Unterbändern des oder der ersten Frequenzbändern zugeordnet sind, optimiert wird, indem eine zweite Einheit ({F_{2,m,n}}) von Frequenzunterbändern gebildet wird, wobei die Unterbänder der zweiten Einheit neben einem anderen Frequenzunterband der zweiten Einheit liegen.

8. Vorrichtung nach Anspruch 7, **dadurch gekennzeichnet, dass** das oder die ersten Frequenzbändern eine Frequenzeinheit darstellen, die einem Antennenbetreiber zugewiesen ist, während das zweite Frequenzband dazu benutzt wird, um zwischen der Antenne und einem Radiosender die von der Antenne auf dem oder den ersten Frequenzbändern empfangenen Signale zu senden, und jeder erste Frequenzwandler (61, 63, 82) durch einen Sollwertgeber (71, 73, 92) am Eingang gesteuert wird, so dass zur Kreuzung mit der Bandbreite des Filters, dem er zugeordnet ist, ein erstes Frequenzunterband, auf dem Signale empfangen werden, die der Antennenbetreiber für nützlich hält, gebracht wird.

9. Vorrichtung nach Anspruch 7 oder 8, **dadurch gekennzeichnet, dass** jedes Filter (64, 66, 85) durch einen Bandbreitenadapter (74, 76, 95) derart gesteuert wird, dass die Bandbreite des Filters einem Segment des ersten Frequenzteilbandes überlagert wird.

10. Vorrichtung nach einem der Ansprüche 7 bis 9, **dadurch gekennzeichnet, dass** jeder zweite Frequenzwandler (67, 69, 88) durch einen Sollwertgeber (77, 79, 98) am Ausgang gesteuert wird, so dass das am Filterausgang erhaltene zweite Frequenzunterband neben mindestens einem anderen Frequenzunterband der zweiten Frequenzeinheit zu liegen kommt.

## Claims

1. A method for sending electromagnetic signals received on one or several first frequency bands, **characterized in that** it comprises steps of:
- for first frequency sub-bands forming a first set ({F_{1,j,k}}) of sub-bands of frequencies of said first frequency band(s), association (202, 212) driven by rules, with each first sub-band of frequencies forming said first set, of one or several second sets ({F_{2,m,n}}) of sub-bands of frequencies in one or several second frequency bands, by a determination (203, 213) for each sub-band of frequencies, of a frequency translation (Δf), the rules comprising rules for building a second set ({F_{2,m,n}}) of sub-bands of frequencies, the sub-bands of the second set being next to at least one other sub-band of frequencies of said set, to optimize the filling of the second band(s) of frequencies with the sub-bands of the second set,
and transposition of the received signals in the first sub-bands of frequencies into signals sent in the associated second sub-bands of frequencies.

2. The method according to claim 1, **characterized in that** the first frequency band(s) make up a set of frequencies assigned to an operator of an antenna, while the second frequency band is used to send, between the antenna and a radio transmission station, the signals received by the antenna on the first frequency band(s), said driven association being applied only to frequency sub-bands in which electromagnetic signals are received that are deemed useful by the operator of the antenna.

3. The method according to claim 1 or 2, **characterized in that** the rules comprise rules consisting of associating a second frequency sub-band with a segment covering all or part of a first frequency sub-band.

4. The method according to one of the preceding claims, **characterized in that** it is used in a cellular communication network.

5. The method according to one of the preceding claims, **characterized in that** the signals are sent over a wireless link.

6. The method according to one of claims 1 to 4, **characterized in that** the signals are sent over an optical fiber.

7. A device for sending, in one or several second frequency bands, electromagnetic signals received on one or several first frequency bands, **characterized in that** it comprises:
- a battery of filters (64, 66, 85) each having a bandwidth;
- at the input of each filter (64, 66, 85), a first frequency converter (61, 63, 82) transposing the signals received on a first frequency sub-band of the first frequency band(s) on the bandwidth of the filter with which it is associated;
- at the output of each filter (64, 66, 85), a second frequency converter (67, 69, 88) applying a determined frequency translation, by transposing the signals of the bandwidth of the filter with which it is associated, in a second sub-band of the second frequency band,
the frequency translation being determined so as to optimize the filling of the second frequency band with the sub-bands associated with the sub-bands of the first frequency band(s), by building a second set ({F2,m,n}) of frequency sub-bands, the sub-bands of the second set being next to at least one other frequency sub-band of said second set.

8. The device according to claim 7, **characterized in that** the first frequency band(s) constitute a set of frequencies allocated to an operator of an antenna, while the second frequency band is used to send, between the antenna and a radio transmission station, the signals received by the antenna on the first frequency band(s), and each first frequency converter (61, 63, 82) is commanded by an input setpoint generator (71, 73, 92) so as to make intersect, with the bandwidth of the filter with which it is associated, a first frequency sub-band in which signals deemed useful by the operator of the antenna are received.

9. The device according to claim 7 or 8, **characterized in that** each filter (64, 66, 85) is commanded by a bandwidth adapter (74, 76, 95) so as to superimpose the bandwidth of the filter on a first frequency sub-band segment.

10. The device according to one of claims 7 to 9, **characterized in that** each second frequency converter (67, 69, 88) is commanded by an output setpoint generator (77, 79, 98) so as to make the second frequency sub-band obtained at the output of the filter, next to at least one other frequency sub-band of the second set of frequencies.
